# EUROPEAN PATENT APPLICATION

(11) **EP 4 235 861 A1**
(43) Date of publication of application: **30.08.2023**
(21) Application number: 21901001.4
(22) Date of filing: 01.12.2021
(51) Int. Cl.: H01M 4/36, H01M 4/525, H01M 4/505, C01G 53/00

(54) **POSITIVE ELECTRODE ACTIVE MATERIAL PRECURSOR, METHOD FOR MANUFACTURING SAME, AND POSITIVE ELECTRODE ACTIVE MATERIAL**

(30) Priority: 01.12.2020 KR 20200165675
(71) Applicant: LG CHEM, LTD., Yeongdeungpo-gu Seoul 07336 (KR)
(72) Inventor: JEONG, Jin Hoo, Daejeon 34122 (KR); JEONG, Myung Gi, Daejeon 34122 (KR); JU, Jin Wook, Daejeon 34122 (KR); SHIM, Jong Hyun, Daejeon 34122 (KR); SEO, You Kyong, Daejeon 34122 (KR); GU, Ye Hyeon, Daejeon 34122 (KR)
(74) Representative: Hoffmann Eitle
(86) International application number: PCT/KR2021/018012
(87) International publication number: WO 2022/119313

(57) **Abstract**

The present invention relates to a positive electrode active material precursor, which is a spherical secondary particle formed by aggregation of primary particles and includes a first core portion composed of the randomly oriented primary particles, a first shell portion which is formed on the first core portion and composed of the primary particles having a (001) plane oriented in a direction from a center of the secondary particle toward a surface thereof, and a second shell portion which is formed on the first shell portion and composed of the randomly oriented primary particles, a method of preparing the same, and a positive electrode active material prepared from the positive electrode active material precursor.

## Description

### TECHNICAL FIELD

### Cross-reference to Related Applications

This application claims priority from Korean Patent Application No. 10-2020-0165675, filed on December 1, 2020, the disclosure of which is incorporated by reference herein.

### Technical Field

The present invention relates to a positive electrode active material precursor capable of achieving a secondary battery having excellent capacity characteristics, life characteristics, and resistance characteristics, a method of preparing the same, and a positive electrode active material.

### BACKGROUND ART

Demand for secondary batteries as an energy source has been significantly increased as technology development and demand with respect to mobile devices and electric vehicles have recently increased. Among these secondary batteries, lithium secondary batteries having high energy density, high voltage, long cycle life, and low self-discharging rate have been commercialized and widely used.

Lithium transition metal oxides, such as lithium cobalt oxide such as LiCoO₂, lithium nickel oxide such as LiNiO₂, lithium manganese oxide such as LiMnO₂ or LiMn₂O₄, or lithium iron phosphate such as LiFePO₄, have been developed as a positive electrode active material of the lithium secondary battery, and, recently, lithium composite transition metal oxides including two or more types of transition metals, for example, Li [NiₐCo_{b}Mn_{c}]O₂, Li[NiₐCo_{b}Al_{c}]O₂, and Li[NiₐCo_{b}Mn_{c}Al_{d}]O₂, have been developed and widely used.

In addition, with respect to the above-described lithium composite transition metal oxide including two or more types of transition metals, a method of doping the lithium composite transition metal oxide with a doping element or coating a surface thereof is used to improve battery performance and stability.

However, during doping with the doping element or surface coating, since an unwanted material is formed on the surface of the positive electrode active material due to a side reaction or a shape or orientation of primary particles included in the positive electrode active material is modified, there is a problem in that capacity, life, or resistance characteristics are degraded when the positive electrode active material is used in a battery.

Accordingly, there is a need for a positive electrode active material capable of improving the capacity characteristics, life characteristics, and resistance characteristics of the battery.

### DISCLOSURE OF THE INVENTION

### TECHNICAL PROBLEM

An aspect of the present invention provides a positive electrode active material precursor and a positive electrode active material which may achieve a secondary battery having excellent capacity characteristics, life characteristics, and resistance characteristics.

### TECHNICAL SOLUTION

According to an aspect of the present invention, there is provided a positive electrode active material precursor which is a spherical secondary particle formed by aggregation of primary particles and includes a first core portion composed of the randomly oriented primary particles; a first shell portion which is formed on the first core portion and composed of the primary particles having a (001) plane oriented in a direction from a center of the secondary particle toward a surface thereof; and a second shell portion which is formed on the first shell portion and composed of the randomly oriented primary particles.

According to another aspect of the present invention, there is provided a method of preparing the positive electrode active material precursor according to the present invention which includes the steps of: (A) forming a first core portion by a co-precipitation reaction while adding a transition metal-containing solution containing nickel (Ni), cobalt (Co), and manganese (Mn) ions, an ammonium cationic complexing agent, and a basic solution to a reactor; (B) forming a first shell portion on the first core portion by a co-precipitation reaction while adding the transition metal-containing solution, an ammonium cationic complexing agent, and a basic solution to the reactor including the first core portion; and (C) forming a second shell portion on the first shell portion by a co-precipitation reaction while adding the transition metal-containing solution, an ammonium cationic complexing agent, a basic solution, and a third doping solution containing M3 (at least one element selected from niobium (Nb), titanium (Ti), aluminum (Al), molybdenum (Mo), tungsten (W), tantalum (Ta), vanadium (V), and lanthanum (La)) ions to the reactor including the first shell portion formed on the first core portion, wherein the co-precipitation reaction of step (B) is performed at a lower pH than the co-precipitation reaction of step (A).

According to another aspect of the present invention, there is provided a positive electrode active material which is a spherical secondary particle formed by aggregation of primary particles and includes a second core portion composed of the randomly oriented primary particles; a third shell portion which is formed on the second core portion and composed of the rod-shaped primary particles having a (003) plane oriented in a direction from a center of the secondary particle toward a surface thereof; and a fourth shell portion which is formed on the third shell portion and composed of the randomly oriented primary particles.

### ADVANTAGEOUS EFFECTS

Since a positive electrode active material precursor according to the present invention includes a first core portion composed of randomly oriented primary particles; a first shell portion which is formed on the first core portion and composed of primary particles having a (001) plane oriented in a direction from a center of a secondary particle toward a surface thereof; and a second shell portion which is formed on the first shell portion and composed of randomly oriented primary particles, orientation of the positive electrode active material precursor remains even in a positive electrode active material which is prepared by sintering the positive electrode active material precursor, and thus, capacity characteristics, life characteristics, and resistance characteristics may be improved.

### BRIEF DESCRIPTION OF THE DRAWINGS

FIG. 1 is a schematic view of a positive electrode active material precursor according to the present invention;
FIG. 2 is a schematic view of a positive electrode active material according to the present invention;
FIG. 3(A) is a scanning electron microscope (SEM) image of a cross section of a positive electrode active material precursor of Example 1, and FIG. 3(B) is a transmission electron microscope (TEM) image of a first shell portion of the positive electrode active material precursor of Example 1;
FIG. 4(A) is an SEM image of a cross section of a positive electrode active material of Example 1, and FIG. 4(B) is TEM images of a third shell portion and a fourth shell portion of the positive electrode active material of Example 1;
FIGS. 5 through 7 are SEM images of (A) positive electrode active material precursor and (B) positive electrode active material of each of Examples 1 to 3; and
FIGS. 8 and 9 are SEM images of (A) positive electrode active material precursor, (B) cross section of the positive electrode active material precursor, (C) positive electrode active material, (D) cross section of the positive electrode active material of each of Comparative Examples 1 and 2.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

The expression "D₅₀" in the present specification may be defined as a particle diameter at a cumulative volume of 50% in a particle size distribution curve (graph curve of particle size distribution). The D₅₀, for example, may be measured by using a laser diffraction method. The laser diffraction method may generally measure a particle diameter ranging from a submicron level to a few mm and may obtain highly repeatable and high-resolution results.

The term "on" in the present specification means not only a case in which one component is formed directly on an upper surface of another component, but also includes a case in which intervening components may also be present.

The expression "primary particle" in the present specification denotes a smallest particle unit which is distinguished as one body when a cross section of a positive electrode active material is observed through a scanning electron microscope (SEM), wherein it may be composed of a single grain, or may also be composed of a plurality of grains.

The expression "secondary particle" in the present specification denotes a secondary structure formed by aggregation of a plurality of primary particles.

The present inventors have found that, when a positive electrode active material is prepared by using a positive electrode active material precursor having a specific shape, the prepared positive electrode active material also has a specific shape, and, when the positive electrode active material is used in a secondary battery, capacity characteristics and life characteristics of the battery are improved, thereby leading to the completion of the present invention.

### Positive Electrode Active Material Precursor

A positive electrode active material precursor according to the present invention is a spherical secondary particle formed by aggregation of primary particles, and includes a first core portion composed of the randomly oriented primary particles; a first shell portion which is formed on the first core portion and composed of the primary particles having a (001) plane oriented in a direction from a center of the secondary particle toward a surface thereof; and a second shell portion which is formed on the first shell portion and composed of the randomly oriented primary particles.

According to the present invention, the first core portion of the positive electrode active material precursor is composed of the randomly oriented primary particles, the first shell portion is composed of the primary particles oriented in the direction from the center of the secondary particle toward the surface thereof, the second shell portion is composed of the randomly oriented primary particles, and thus, when a positive electrode active material is prepared, orientation of the positive electrode active material precursor may be reflected in the positive electrode active material to improve capacity characteristics, life characteristics, and resistance characteristics.

According to the present invention, the first core portion may have a composition represented by Formula 1 below.

[Formula 1] [Niₐ₁Co_{b1}Mn_{c1}Ml_{d1}M2ₑ₁](OH)₂

In Formula 1,
M1 is at least one element selected from zirconium (Zr), boron (B), and magnesium (Mg),
M2 is at least one element selected from niobium (Nb), titanium (Ti), aluminum (Al), molybdenum (Mo), tungsten (W), tantalum (Ta), vanadium (V), and lanthanum (La), and
0.6≤a1<1, 0<b1≤0.4, 0<c1≤0.4, 0≤d1≤0.1, 0≤e1≤0.1, and a1+b1+c1+d1+e1=1.

In Formula 1, M1 may be at least one element selected from Zr and B, and M2 may be at least one element selected from Nb and Ti.
a1 denotes an atomic fraction of nickel among metallic elements in the first core portion, wherein a1 may satisfy 0.6≤a1<1, 0.6≤a1≤0.98, or 0.7≤a1≤0.95.
b1 denotes an atomic fraction of cobalt among the metallic elements in the first core portion, wherein b1 may satisfy 0<b1≤0.4, 0.01≤b1≤0.4, or 0.01≤b1≤0.3.
c1 denotes an atomic fraction of manganese among the metallic elements in the first core portion, wherein c1 may satisfy 0<c1≤0.4, 0.01≤c1≤0.4, or 0.01≤c1≤0.3.
d1 denotes an atomic fraction of the M1 element among the metallic elements in the first core portion, wherein d1 may satisfy 0≤d1≤0.1, 0≤d1≤0.05, or 0.001≤d1≤0.05.
e1 denotes an atomic fraction of the M2 element among the metallic elements in the first core portion, wherein e1 may satisfy 0<e1≤0.1, 0.01≤e1≤0.1, or 0.01≤e1≤0.05.

According to the present invention, the first shell portion may have a composition represented by Formula 2 below.

[Formula 2] [Niₐ₂Co_{b2}Mn_{c2}M1_{d2}](OH)₂

In Formula 2,
M1 is at least one element selected from Zr, B, and Mg, and
0.6≤a2<1, 0<b2≤0.4, 0<c2≤0.4, 0≤d2≤0.1, and a2+b2+c2+d2=1.

In Formula 2, M1 may be at least one element selected from Zr and B.
a2 denotes an atomic fraction of nickel among metallic elements in the first shell portion, wherein a2 may satisfy 0.6≤a2<1, 0.6≤a2≤0.98, or 0.7≤a2≤0.95.
b2 denotes an atomic fraction of cobalt among the metallic elements in the first shell portion, wherein b2 may satisfy 0<b2≤0.4, 0.01≤b2≤0.4, or 0.01≤b2≤0.3.
c2 denotes an atomic fraction of manganese among the metallic elements in the first shell portion, wherein c2 may satisfy 0<c2≤0.4, 0.01≤c2≤0.4, or 0.01≤c2≤0.3.
d2 denotes an atomic fraction of the M1 element among the metallic elements in the first shell portion, wherein d2 may satisfy 0≤d2≤0.1, 0≤d2≤0.05, or 0.001≤d2≤0.05.

According to the present invention, the second shell portion may have a composition represented by Formula 3 below.

[Formula 3] [Niₐ₃Co_{b3}Mn_{c3}M1_{d3}M3_{f3}](OH)₂

In Formula 3,
M1 is at least one element selected from Zr, B, and Mg,
M3 is at least one element selected from Nb, Ti, Al, Mo, W, Ta, V, and La, and
0.6≤a3<1, 0<b3≤0.4, 0<c3≤0.4, 0≤d3≤0.1, 0<f3≤0.1, and a3+b3+c3+d3+f3=1.

In Formula 3, M1 may be at least one element selected from Zr and B, and M3 may be Al.
a3 denotes an atomic fraction of nickel among metallic elements in the second shell portion, wherein a3 may satisfy 0.6≤a3<1, 0.6≤a3≤0.98, or 0.7≤a3≤0.95.
b3 denotes an atomic fraction of cobalt among the metallic elements in the second shell portion, wherein b3 may satisfy 0<b3≤0.4, 0.01≤b3≤0.4, or 0.01≤b3≤0.3.
c3 denotes an atomic fraction of manganese among the metallic elements in the second shell portion, wherein c3 may satisfy 0<c3≤0.4, 0.01≤c3≤0.4, or 0.01≤c3≤0.3.
d3 denotes an atomic fraction of the M1 element among the metallic elements in the second shell portion, wherein d3 may satisfy 0≤d3≤0.1, 0≤d3≤0.05, or 0.001≤d3≤0.05.
f3 denotes an atomic fraction of the M3 element among the metallic elements in the second shell portion, wherein f3 may satisfy 0<f3≤0.1, 0.01≤f3≤0.1, or 0.01≤f3≤0.05.

The positive electrode active material precursor may specifically include the first core portion having the composition represented by Formula 1; the first shell portion which is formed on the first core portion and has the composition represented by Formula 2; and the second shell portion which is formed on the first shell portion and has the composition represented by Formula 3. In this case, M1 may be an element that does not affect orientation of the primary particles included in the positive electrode active material precursor, for example, Zr or B, and M3 may be an element that eliminates the orientation of the primary particles included in the positive electrode active material precursor, for example, Nb, Ti, Al, or Mo.

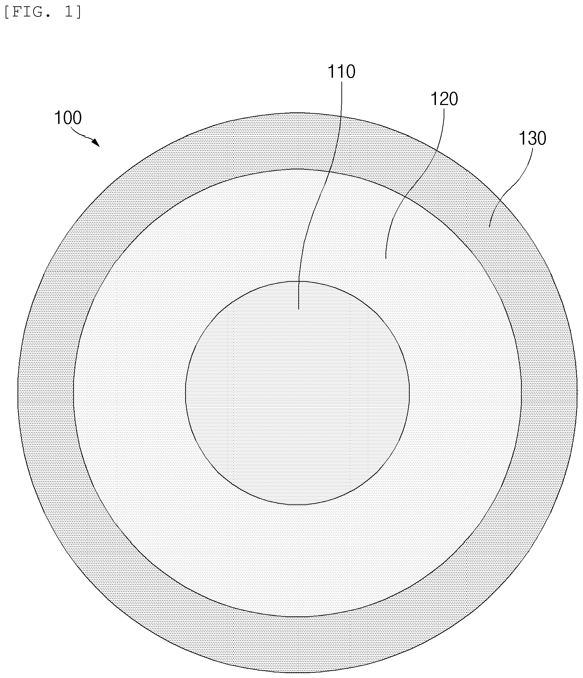

FIG. 1 is a schematic view of the positive electrode active material precursor according to the present invention. Referring to FIG. 1, it may be confirmed that a positive electrode active material precursor 100 according to the present invention is formed in a form of a first core portion 110-a first shell portion 120-a second shell portion 130. Since the positive electrode active material precursor according to the present invention is formed in the form of the first core portion-the first shell portion-the second shell portion and the first core portion, the first shell portion, and the second shell portion have compositions of [Niₐ₁Co_{b1}Mn_{c1}M1_{d1}M2ₑ₁](OH)₂, [Niₐ₂Co_{b2}Mn_{c2}M1_{d2}](OH)₂, and [Niₐ₃Co_{b3}Mn_{c3}M1_{d3}M3_{f3}](OH)₂, respectively, a side reaction between dopants is suppressed and doping efficiency is increased, and thus, characteristics suitable for the purpose of dopant selection, for example, an increase in lifetime or an improvement in output, may be achieved without degradation of existing performance.

According to the present invention, the first shell portion may have a thickness of 1 um or more to 9 um or less, particularly 2 pm or more to 7 pm or less, and more particularly 2 um or more to 4 um or less. In this case, since it is possible to increase a ratio of the primary particles maintaining a radial orientation of a (003) plane in a positive electrode active material when the positive electrode active material is prepared by sintering the positive electrode active material precursor, the life characteristics and resistance characteristics may be improved.

According to the present invention, the second shell portion may have a thickness of 0.5 um or more to 2 um or less, for example, 0.5 um or more to 1.5 um or less. In this case, since particles having an average particle diameter (D₅₀) of 1 um or less may be formed on a surface of a positive electrode active material when the positive electrode active material is prepared by sintering the positive electrode active material precursor, the capacity characteristics and output characteristics may be improved.

The positive electrode active material precursor may have an average particle diameter (D₅₀) of 1 um to 20 um, particularly 4 um to 18 µm, and more particularly 9 um to 15 um. In a case in which the average particle diameter of the positive electrode active material precursor is within the above range, energy density of the battery is increased and there is an advantageous effect on the life or output characteristics.

### Method of Preparing Positive Electrode Active Material Precursor

The positive electrode active material precursor according to the present invention may be prepared by a method including the steps of: (A) forming a first core portion by a co-precipitation reaction while continuously adding a transition metal-containing solution containing nickel (Ni), cobalt (Co), and manganese (Mn) ions, an ammonium cationic complexing agent, and a basic solution to a reactor (optionally a first doping solution containing M1 ions and/or a second doping solution containing M2 ions may be further added); (B) forming a first shell portion on the first core portion by a co-precipitation reaction while continuously adding the transition metal-containing solution, an ammonium cationic complexing agent, and a basic solution to the reactor including the first core portion (optionally a first doping solution containing M1 ions may be further added); and (C) forming a second shell portion on the first shell portion by a co-precipitation reaction while continuously adding the transition metal-containing solution, a third doping solution, an ammonium cationic complexing agent, and a basic solution to the reactor including the first shell portion formed on the first core portion (optionally a first doping solution containing M1 ions may be further added). In this case, the co-precipitation reaction of step (B) may be performed at a lower pH than the co-precipitation reaction of step (A).

In step (A), the first core portion may be formed by a co-precipitation reaction while further adding the first doping solution containing M1 (at least one element selected from Zr, B, and Mg) ions, the second doping solution containing M2 (at least one element selected from Nb, Ti, Al, Mo, W, Ta, V, and La) ions, or a combination thereof.

In step (B), the first shell portion may be formed on the first core portion by a co-precipitation reaction while further adding the first doping solution containing M1 (at least one element selected from Zr, B, and Mg) ions.

In step (C), the second shell portion may be formed on the first shell portion by a co-precipitation reaction while further adding the first doping solution containing M1 (at least one element selected from Zr, B, and Mg) ions.

According to the method of preparing the positive electrode active material precursor, since two or more types of doping elements may be doped stepwise, the two or more types of doping elements may be doped without reducing doping efficiency.

M1 may be included in all of the first core portion, the first shell portion, and the second shell portion, and, in this case, without separately preparing the first doping solution, after additionally adding an M1 raw material to the transition metal-containing solution, the positive electrode active material precursor may be prepared by a co-precipitation reaction while continuously adding the transition metal-containing solution further containing the M1 ions to the reactor. In this case, the M1 raw material may be non-reactive with the transition metal-containing solution. In a case in which M1 is zirconium, the M1 raw material, for example, may be Zr(SO₄)₂, ZrCl₄, or Zr(C₈H₁₂O₈). In a case in which M1 is boron, the M1 raw material, for example, may be H₃BO₃, B₂O₃, or BCl₃.

The transition metal-containing solution may include a nickel raw material, a cobalt raw material, and a manganese raw material.

The nickel raw material may be nickel-containing acetic acid salts, nitrates, sulfates, halides, sulfides, hydroxides, oxides, or oxyhydroxides, and may specifically be Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, Ni(SO₃)₂, or a combination thereof, but the present invention is not limited thereto.

The cobalt raw material may be cobalt-containing acetic acid salts, nitrates, sulfates, halides, sulfides, hydroxides, oxides, or oxyhydroxides, and may specifically be Co(OH)₂, CoOOH, Co(OCOCH₃)₂·4H₂O, Co(NO₃)₂·6H₂O, CoSO₄, Co(SO₄)₂·7H₂O, Co(SO₃)₂, or a combination thereof, but the present invention is not limited thereto.

The manganese raw material may be manganese-containing acetic acid salts, nitrates, sulfates, halides, sulfides, hydroxides, oxides, or oxyhydroxides, and may specifically be Mn₂O₃, MnO₂, Mn₃O₄, MnCO₃, Mn(NO₃)₂, MnSO₄, Mn(SO₃)₂, manganese acetate, manganese dicarboxylate, manganese citrate, a fatty acid manganese salt, a manganese oxyhydroxide, manganese chloride, or a combination thereof, but the present invention is not limited thereto.

The transition metal-containing solution may be prepared by adding the nickel raw material, the cobalt raw material, and the manganese raw material to a solvent, specifically water, or a mixture of water and an organic solvent (e.g., alcohol, etc.) which may be uniformly mixed with the water, but the present invention is not limited thereto. In a case in which the transition metal-containing solution further contains ions of at least one element selected from Zr, Al, W, Ti, Nb, Ta, V, Mo, and B, the transition metal-containing solution may be prepared by adding a raw material containing at least one element selected from Zr, Al, W, Ti, Nb, Ta, V, Mo, and B together to the solvent.

The first doping solution contains M1 (at least one element selected from Zr, B, and Mg) ions. The first doping solution may be prepared by adding a M1-containing raw material (ex. Zr(SO₄)₂, H₃BO₃, etc.) to a solvent, specifically water, or a mixture of water and an organic solvent (e.g., alcohol, etc.), which may be uniformly mixed with the water, or a basic solvent such as a NaOH aqueous solution, but the present invention is not limited thereto.

The second doping solution contains M2 (at least one element selected from Nb, Ti, Al, Mo, W, Ta, V, and La) ions, and the third doping solution contains M3 (at least one element selected from Nb, Ti, Al, Mo, W, Ta, V, and La) ions. The second or third doping solution may be prepared by adding a M2 or M3-containing raw material (ex. ammonium niobate oxalate, ammonium titanyl oxalate, Al(NO₃)₂, etc.) to a solvent, specifically water, or a mixture of water and an organic solvent (e.g., alcohol, etc.), which may be uniformly mixed with the water, or a basic solvent such as a NaOH aqueous solution, but the present invention is not limited thereto.

The ammonium cationic complexing agent, for example, may include NH₄OH, (NH₄)₂SO₄, NH₄NO₃, NH₄Cl, CH₃COONH₄, NH₄CO₃, or a combination thereof, but the present invention is not limited thereto. The ammonium cationic complexing agent may be used in the form of an aqueous solution, and, in this case, water or a mixture of water and an organic solvent (specifically, alcohol, etc.), which may be uniformly mixed with the water, may be used as a solvent.

The basic solution, as a precipitant, may include a hydroxide of alkali metal or alkaline earth metal, such as NaOH, KOH, or Ca(OH)₂, a hydrate thereof, or an alkaline compound of a combination thereof. The basic solution may also be used in the form of an aqueous solution, and, in this case, water or a mixture of water and an organic solvent (specifically, alcohol, etc.), which may be uniformly mixed with the water, may be used as a solvent.

The co-precipitation reactions in steps (A), (B), and (C) may be performed under the following conditions. However, the present invention is not limited thereto.

The co-precipitation reaction of step (A) may be performed at a pH of 10 to 12.5, particularly at a pH of 11 to 12.5, and more particularly at a pH of 11.5 to 12.5. In a case in which the co-precipitation reaction of step (A) is performed within the above pH range, a small and uniform core may be formed by promoting reactivity of the metallic element with a -OH group.

The co-precipitation reaction of step (A) may be performed at a temperature of 40°C to 60°C, particularly 50°C to 58°C, and more 50°C to 55°C. In a case in which the co-precipitation reaction of step (A) is performed within the above temperature range, yield may be increased while size and uniformity of the primary particles are improved.

The co-precipitation reaction of step (A) may be performed for 0.5 hours to 20 hours, particularly 1 hour to 16 hours, and more particularly 1.5 hours to 16 hours. In a case in which the co-precipitation reaction of step (A) is performed within the above time range, it is possible to prepare for a growth step by decreasing surface energy and improving uniformity through the reaction for a sufficient time after seed formation.

The co-precipitation reaction of step (A) may be performed in a non-oxidizing atmosphere, specifically, a nitrogen atmosphere. In this case, since oxidation of the precursor may be suppressed, a uniform phase precursor may be secured.

Step (A) is a seed formation step, wherein the first core portion prepared through step (A) is composed of the randomly oriented primary particles. In the seed formation step, a doping solution containing a doping element may be optionally further added to improve performance of the battery, wherein, in the seed formation step, primary particles without orientation are formed regardless of the type of the doping element.

The co-precipitation reaction of step (B) may be performed at a pH of 10 to 11.8, particularly at a pH of 10.5 to 11.6, and more particularly at a pH of 11 to 11.4. In a case in which the co-precipitation reaction of step (B) is performed at a pH which is lower than that of the co-precipitation reaction of step (A) and is within the above range, since the formation of seeds may be suppressed and primary particles on surfaces may be grown from the previously formed seeds, a size of the precursor particles may be gradually increased. If the pH is excessively high, since a surface of the primary particle is formed by coalescence rather than oriented growth, polycrystallinity is increased during sintering for the preparation of a positive electrode active material to form many grains and defects in the primary particle, and thus, the life characteristics may be degraded.

The co-precipitation reaction of step (B) may be performed at a temperature of 40°C to 60°C, particularly 50°C to 58°C, and more 50°C to 55°C. In a case in which the co-precipitation reaction of step (B) is performed within the above temperature range, there is an effect of suppressing formation of additional particles and inducing uniform growth of the particles.

The co-precipitation reaction of step (B) may be performed for 10 hours to 100 hours, particularly 20 hours to 80 hours, and more particularly 30 hours to 64 hours. In a case in which the co-precipitation reaction of step (B) is performed within the above time range, since sphericity of the particles is increased and a particle size distribution is reduced, uniform primary particles may be formed.

The co-precipitation reaction of step (B) may be performed in a non-oxidizing atmosphere, specifically, a nitrogen atmosphere. In this case, the phase of the precursor may be uniformly formed to make reactivity with lithium uniform, and the defects in the primary particle may be suppressed.

Step (B) is a particle growth step, wherein the primary particles constituting the first shell portion prepared through step (B) may have a specific orientation. Specifically, primary particles having a (001) plane oriented in a direction from the center of the secondary particle toward the surface thereof may be prepared. In step (B), the first doping solution containing a doping element (at least one element selected from Zr, B and Mg), which does not eliminate the orientation of the primary particles (does not affect the orientation of the primary particles), may be optionally further added to improve the performance of the battery.

The co-precipitation reaction of step (C) may be performed at a pH of 10 to 11.8, particularly at a pH of 10.5 to 11.6, and more particularly at a pH of 10.8 to 11.2. In a case in which the co-precipitation reaction of step (C) is performed within the above pH range, there is an advantageous effect in that a side reaction, which may occur due to a difference in reactivity with the existing metallic ions, is suppressed while the wet dopant is added and the doping element is uniformly doped on the surface.

The co-precipitation reaction of step (C) may be performed at a temperature of 40°C to 60°C, particularly 50°C to 58°C, and more 50°C to 55°C. In a case in which the co-precipitation reaction of step (C) is performed within the above temperature range, there is an effect of suppressing formation of additional particles and inducing uniform growth of the particles.

The co-precipitation reaction of step (C) may be performed for 2 hours to 48 hours, particularly 4 hours to 40 hours, and more particularly 8 hours to 32 hours. In a case in which the co-precipitation reaction of step (C) is performed within the above time range, since a thickness of the primary particle is gradually decreased during step (C) and a growth direction of the primary particle is randomly formed, a Brunauer-Emmett-Teller (BET) of the surface of the positive electrode active material prepared during the sintering of the positive electrode active material precursor may be increased.

The co-precipitation reaction of step (C) may be performed in a non-oxidizing atmosphere, specifically, a nitrogen atmosphere. In this case, the phase of the precursor may be uniformly formed to make the reactivity with lithium uniform, and the defects in the primary particle may be suppressed.

Step (C) is also a particle growth step, but, since the third doping solution containing a doping element (at least one element selected from Nb, Ti, Al, Mo, W, Ta, V, and La), which eliminates the orientation of the primary particles, is essentially added in step (C), the primary particles constituting the second shell portion prepared through step (C) does not have an orientation.

### Positive Electrode Active Material

A positive electrode active material according to the present invention is a spherical secondary particle formed by aggregation of primary particles, and includes a second core portion composed of the randomly oriented primary particles; a third shell portion which is formed on the second core portion and composed of the rod-shaped primary particles having a (003) plane oriented in a direction from a center of the secondary particle toward a surface thereof; and a fourth shell portion which is formed on the third shell portion and composed of the randomly oriented primary particles.

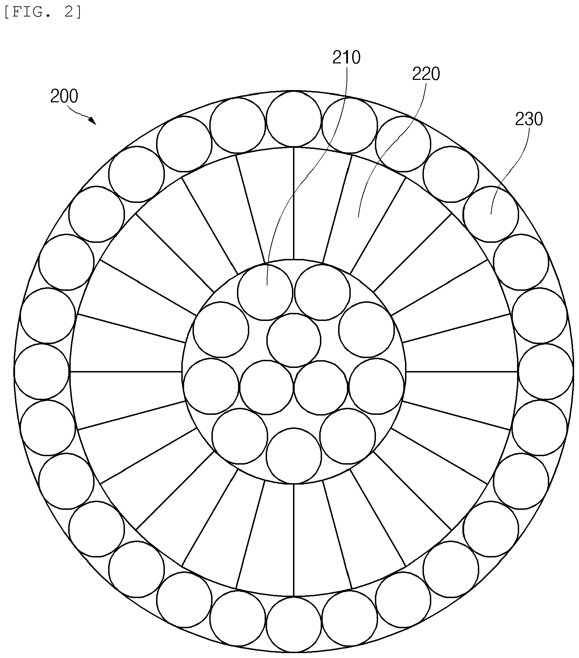

Referring to FIG. 2 which is a schematic view of the positive electrode active material according to the present invention, a positive electrode active material 200 may include a second core portion 210 composed of the randomly oriented primary particles, a third shell portion 220 composed of the rod-shaped primary particles in which the (003) plane is oriented in the direction from the center of the secondary particle toward the surface thereof, and a fourth shell portion 230 composed of the randomly oriented primary particles. In this case, since the rod-shaped primary particles are formed in a specific orientation in the third shell portion as an intermediate layer, the output characteristics may be improved by minimizing a movement path of lithium during liquid diffusion outside the primary particle.

According to the present invention, the primary particles constituting the second core portion may be spherical primary particles. In addition, the primary particles constituting the fourth shell portion may be spherical primary particles. The positive electrode active material is prepared from the positive electrode active material precursor according to the present invention and is formed in a form of the second core portion-the third shell portion-the fourth shell portion, wherein, while the second core portion, the third shell portion, and the fourth shell portion have a uniform composition (even if compositions of the first core portion, the first shell portion, and the second shell portion of the positive electrode active material precursor are different from each other, the compositions becomes uniform while the positive electrode active material precursor is sintered at a high temperature for a long time), the second core portion may be composed of the randomly oriented spherical primary particles, the third shell portion may be composed of the rod-shaped primary particles having the (003) plane oriented in the direction from the center of the secondary particle toward the surface thereof, and the fourth shell portion may be composed of the randomly oriented spherical primary particles.

According to the present invention, the positive electrode active material may have a composition represented by Formula 4 below.

[Formula 4] Liₓ[Niₐ₄Co_{b4}Mn_{c4}M1_{d4}M2ₑ₄M3_{f4}]O₂

In Formula 4,
M1 is at least one element selected from Zr, B, and Mg,
M2 and M3 are each independently at least one element selected from Nb, Ti, Al, Mo, W, Ta, V, and La, and
0.9≤x≤1.2, 0.6≤a4<1, 0<b4≤0.4, 0<c4≤0.4, 0≤d4≤0.1, 0≤e4≤0.1, 0<f4≤0.1, and a4+b4+c4+d4+e4+f4=1.

According to the present invention, the third shell portion may have a thickness of 1 um or more to 9 um or less, particularly 2 pm or more to 7 pm or less, and more particularly 2 um or more to 5 um or less. In this case, since a ratio of the primary particles having a radial orientation of the (003) plane is high, the life characteristics and resistance characteristics may be improved.

According to the present invention, the fourth shell portion may have a thickness of 0.5 pm or more to 2 pm or less, particularly 0.5 um or more to 1.5 um or less, and more particularly 0.5 um or more to 1 um or less. In this case, the capacity characteristics and output characteristics may be improved by increasing a specific surface area of the positive electrode active material.

The positive electrode active material may have an average particle diameter (D₅₀) of 1 um to 20 um, particularly 4 um to 18 µm, and more particularly 9 um to 15 um. In a case in which the average particle diameter of the positive electrode active material is within the above range, the energy density of the battery is increased and there is an advantageous effect on the life or output characteristics.

### Method of Preparing Positive Electrode Active Material

The positive electrode active material according to the present invention, for example, may be prepared by a method including a step of mixing the positive electrode active material precursor according to the present invention with a lithium-containing raw material and performing a heat treatment on the mixture to form a lithium transition metal oxide. However, the present invention is not limited thereto.

The lithium-containing raw material may be lithium-containing sulfates, nitrates, acetic acid salts, carbonates, oxalates, citrates, halides, hydroxides, or oxyhydroxides. The lithium-containing raw material may specifically be a lithium hydroxide hydrate, for example, LiOH·H₂O. In this case, reactivity between the precursor having a high atomic fraction of nickel among the metallic elements in the precursor and the lithium-containing raw material may be improved.

The positive electrode active material precursor and the lithium-containing raw material may be mixed in a molar ratio of 1:1 to 1:1.1, preferably 1:1.02 to 1:1.07, and more preferably 1:1.05 to 1:1.07 during the preparation of the positive electrode active material. In a case in which the lithium-containing raw material is mixed in a ratio less than the above range, capacity of the prepared positive electrode active material may be reduced, and, in a case in which the lithium-containing raw material is mixed in a ratio greater than the above range, unreacted lithium (Li) remains as a byproduct, the capacity may be reduced, and separation of the positive electrode active material particles (causing a positive electrode active material impregnation phenomenon) may occur after sintering.

A heat treatment temperature may be in a range of 700°C to 850°C, particularly 750°C to 830°C, and more particularly 760°C to 810°C. In a case in which the heat treatment temperature is within the above range, the life or output characteristics may be improved by controlling the size of the primary particles.

The heat treatment may be performed in an oxygen atmosphere. In this case, the reactivity between lithium and the precursor may be increased, generation of an unnecessary phase may be suppressed, and cation mixing may be reduced.

The heat treatment may be performed for 5 hours to 30 hours. The heat treatment may preferably be performed for 8 hours to 20 hours, for example, 8 hours to 15 hours. In a case in which the heat treatment time is within the above range, a layered structure may be uniformly formed, formation of a spinel or rock salt structure may be suppressed, and a value of residual lithium may be reduced.

### Positive Electrode

Also, the present invention may provide a positive electrode for a lithium secondary battery which includes the positive electrode active material prepared by the above-described method.

Specifically, the positive electrode includes a positive electrode collector and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the positive electrode active material.

The positive electrode active material may be included in an amount of 80 wt% to 99 wt%, for example, 85 wt% to 98 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

### Lithium Secondary Battery

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further selectively include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1

NiSO₄, CoSO₄, and MnSO₄ were dissolved in deionized water in amounts such that a molar ratio of Ni:Co:Mn was 88:5:7 to prepare a transition metal-containing solution with a concentration of 2.4 M. 1,500 ppm of Zr(SO₄)₂ and 1,120 ppm of H₃BO₃ (boric acid) were further dissolved in the solution.

Ammonium niobate oxalate was dissolved in deionized water to prepare a second doping solution with a concentration of 1.2 M.

Al(NO₃)₃ was dissolved in deionized water to prepare a third doping solution with a concentration of 1.2 M.

After deionized water was put into a batch reactor (4.5 L), dissolved oxygen in the water was removed by purging the reactor with nitrogen gas to create a non-oxidizing atmosphere in the reactor. Thereafter, 15 wt% NaOH was added so that a pH in the reactor was maintained at 12.1. Thereafter, 450 g of 9 wt% NH₄OH was added.

While the transition metal-containing solution, in which 1,500 ppm of Zr(SO₄)₂ and 1,120 ppm of H₃BO₃ (boric acid) were further dissolved, the second doping solution, and 9 wt% NH₄OH were added to the reactor at rates of 500 mL/h, 25 mL/h, and 150 mL/h, respectively, a reaction was performed for 4 hours at a pH of 11.7 (adjusted by adding 15 wt% NaOH), a reaction temperature of 55°C, and a stirring speed of 650 rpm in a non-oxidizing atmosphere to form a first core portion (average particle diameter (D₅₀): 3.2 µm) represented by Ni_{0.849}Co_{0.048}Mn_{0.068}Nb_{0.024}B_{0.01}Zr_{0.001}(OH) ₂.

The addition of the second doping solution was stopped, and, while the transition metal-containing solution, in which 1,500 ppm of Zr(SO₄)₂ and 1,120 ppm of H₃BO₃ (boric acid) were further dissolved, and 9 wt% NH₄OH were added to the reactor at rates of 500 mL/h and 150 mL/h, respectively, a reaction was performed for 8 hours at a pH of 11.4 (adjusted by adding 15 wt% NaOH), a reaction temperature of 55°C, and a stirring speed of 450 rpm in a non-oxidizing atmosphere to form a first shell portion (thickness: 2.5 um) represented by Ni_{0.87}Co_{0.049}Mn_{0.069}B_{0.01}Zr_{0.002}(OH)₂ on the first core portion.

While the transition metal-containing solution, in which 1,500 ppm of Zr(SO₄)₂ and 1,120 ppm of H₃BO₃ (boric acid) were further dissolved, the third doping solution, and 9 wt% NH₄OH were added to the reactor at rates of 500 mL/h, 50 mL/h, and 150 mL/h, respectively, a reaction was performed for 8 hours at a pH of 11.0 (adjusted by adding 15 wt% NaOH), a reaction temperature of 55°C, and a stirring speed of 350 rpm in a non-oxidizing atmosphere to form a second shell portion (thickness: 1 um) represented by Ni_{0.829}Co_{0.047}Mn_{0.066}Al_{0.047}B_{0.009}Zr_{0.002}(OH)₂ on the first shell portion so that a positive electrode active material precursor was prepared.

The positive electrode active material precursor and LiOH were mixed so that a molar ratio of Li:transition metal was 1.07:1, and heat-treated at 805°C for 20 hours to prepare a positive electrode active material having a composition of LiNi_{0.849}Co_{0.048}Mn_{0.068}Al_{0.019}B_{0.01}Nb_{0.005}Zr_{0.001}O₂.

### Example 2

NiSO₄, CoSO₄, and MnSO₄ were dissolved in deionized water in amounts such that a molar ratio of Ni:Co:Mn was 88:5:7 to prepare a transition metal-containing solution with a concentration of 2.4 M. 1,500 ppm of Zr(SO₄)₂ was further dissolved in the solution.

Ammonium niobate oxalate was dissolved in deionized water to prepare a second doping solution with a concentration of 1.2 M.

Al(NO₃)₃ was dissolved in deionized water to prepare a third doping solution with a concentration of 1.2 M.

After deionized water was put into a batch reactor (4.5 L), dissolved oxygen in the water was removed by purging the reactor with nitrogen gas to create a non-oxidizing atmosphere in the reactor. Thereafter, 15 wt% NaOH was added so that a pH in the reactor was maintained at 12.1. Thereafter, 450 g of 9 wt% NH₄OH was added.

While the transition metal-containing solution, in which 1,500 ppm of Zr(SO₄)₂ was further dissolved, the second doping solution, and 9 wt% NH₄OH were added to the reactor at rates of 500 mL/h, 25 mL/h, and 150 mL/h, respectively, a reaction was performed for 4 hours at a pH of 11.7 (adjusted by adding 15 wt% NaOH), a reaction temperature of 55°C, and a stirring speed of 650 rpm in a non-oxidizing atmosphere to form a first core portion (average particle diameter (D₅₀): 3.2 µm) represented by Ni_{0.857}Co_{0.049}Mn_{0.068}Nb_{0.024}Zr_{0.002}(OH)₂.

The addition of the second doping solution was stopped, and, while the transition metal-containing solution, in which 1,500 ppm of Zr(SO₄)₂ was further dissolved, and 9 wt% NH₄OH were added to the reactor at rates of 500 mL/h and 150 mL/h, respectively, a reaction was performed for 8 hours at a pH of 11.4 (adjusted by adding 15 wt% NaOH), a reaction temperature of 55°C, and a stirring speed of 450 rpm in a non-oxidizing atmosphere to form a first shell portion (thickness: 2.5 um) represented by Ni_{0.879}Co_{0.050}Mn_{0.070}Zr_{0.001}(OH)₂ on the first core portion.

While the transition metal-containing solution, in which 1,500 ppm of Zr(SO₄)₂ was further dissolved, the third doping solution, and 9 wt% NH₄OH were added to the reactor at rates of 500 mL/h, 50 mL/h, and 150 mL/h, respectively, a reaction was performed for 8 hours at a pH of 11.0 (adjusted by adding 15 wt% NaOH), a reaction temperature of 55°C, and a stirring speed of 350 rpm in a non-oxidizing atmosphere to form a second shell portion (thickness: 1 um) represented by Ni_{0.836}Co_{0.048}Mn_{0.067}Al_{0.048}Zr_{0.001}(OH)₂ on the first shell portion so that a positive electrode active material precursor was prepared.

The positive electrode active material precursor and LiOH were mixed so that a molar ratio of Li:transition metal was 1.07:1, and heat-treated at 805°C for 20 hours to prepare a positive electrode active material having a composition of LiNi_{0.857}Co_{0.049}Mn_{0.068}Al_{0.019}Nb_{0.005}Zr_{0.001}O₂.

### Example 3

NiSO₄, CoSO₄, and MnSO₄ were dissolved in deionized water in amounts such that a molar ratio of Ni:Co:Mn was 88:5:7 to prepare a transition metal-containing solution with a concentration of 2.4 M. 1,500 ppm of Zr(SO₄)₂ was further dissolved in the solution.

Ammonium niobate oxalate and ammonium titanyl oxalate were dissolved in deionized water in a molar ratio of 5:1.5 to prepare a second doping solution with a concentration of 1.2 M.

Al(NO₃)₃ was dissolved in deionized water to prepare a third doping solution with a concentration of 1.2 M.

After deionized water was put into a batch reactor (4.5 L), dissolved oxygen in the water was removed by purging the reactor with nitrogen gas to create a non-oxidizing atmosphere in the reactor. Thereafter, 15 wt% NaOH was added so that a pH in the reactor was maintained at 12.1. Thereafter, 450 g of 9 wt% NH₄OH was added.

While the transition metal-containing solution, in which 1,500 ppm of Zr(SO₄)₂ was further dissolved, the second doping solution, and 9 wt% NH₄OH were added to the reactor at rates of 500 mL/h, 25 mL/h, and 150 mL/h, respectively, a reaction was performed for 4 hours at a pH of 11.7 (adjusted by adding 15 wt% NaOH), a reaction temperature of 55°C, and a stirring speed of 650 rpm in a non-oxidizing atmosphere to form a first core portion (average particle diameter (D₅₀): 3.2 µm) represented by Ni_{0.851}Co_{0.048}Mn_{0.068}Nb_{0.024}Ti_{0.007}Zr_{0.002}(OH)₂.

The addition of the second doping solution was stopped, and, while the transition metal-containing solution, in which 1,500 ppm of Zr(SO₄)₂ was further dissolved, and 9 wt% NH₄OH were added to the reactor at rates of 500 mL/h and 150 mL/h, respectively, a reaction was performed for 8 hours at a pH of 11.4 (adjusted by adding 15 wt% NaOH), a reaction temperature of 55°C, and a stirring speed of 450 rpm in a non-oxidizing atmosphere to form a first shell portion (thickness: 2.5 um) represented by Ni_{0.879}C_{0.050}Mn_{0.070}Zr_{0.001}(OH)₂ on the first core portion.

While the transition metal-containing solution, in which 1,500 ppm of Zr(SO₄)₂ was further dissolved, the third doping solution, and 9 wt% NH₄OH were added to the reactor at rates of 500 mL/h, 50 mL/h, and 150 mL/h, respectively, a reaction was performed for 8 hours at a pH of 11.0 (adjusted by adding 15 wt% NaOH), a reaction temperature of 55°C, and a stirring speed of 350 rpm in a non-oxidizing atmosphere to form a second shell portion (thickness: 1 um) represented by Ni_{0.836}Co_{0.048}Mn_{0.067}Al_{0.048}Zr_{0.001}(OH)₂ on the first shell portion so that a positive electrode active material precursor was prepared.

The positive electrode active material precursor and LiOH were mixed so that a molar ratio of Li:transition metal was 1.07:1, and heat-treated at 805°C for 20 hours to prepare a positive electrode active material having a composition of LiNi_{0.0856}Co_{0.049}Mn_{0.068}Al_{0.019}Nb_{0.005}Ti_{0.001}Zr_{0.001}O₂.

### Comparative Example 1

After 4 liters of distilled water was put in a batch reactor (20 L), the temperature was maintained at 58°C, a transition metal aqueous solution with a concentration of 2.29 mol/L, in which NiSO₄, CoSO₄, and MnSO₄ were mixed in amounts such that a molar ratio of nickel:cobalt:manganese was 88:5:7, was added to the reactor at a rate of 510 ml/hr, and a 9 wt% aqueous ammonia solution was continuously added to the reactor at a rate of 510 ml/hr. Also, a 15 wt% aqueous sodium hydroxide solution was added at a rate of 306 ml/hr, and the addition of the aqueous sodium hydroxide solution was adjusted so that a pH was maintained at 11.4.

In the first 30 minutes, nucleation was performed while stirring at 600 rpm, and, thereafter, particles were grown while stirring at 250 rpm to 600 rpm. When the inside of the batch reactor was filled by performing a co-precipitation reaction for 20 hours, the stirring was stopped, the precursor particles were precipitated, and, after removing a supernatant after leaving 4 L of the reactants, the reaction was performed again. The reaction was performed for a total of 40 hours to form precursor particles.

The above-prepared positive electrode active material precursor, LiOH, and doping elements Al, B, Nb, and Zr were mixed in a molar ratio of 1:1.07:0.02:0.01:0.005:0.0015, and sintered at 770°C for 10 hours in an oxygen atmosphere to prepare an NCMA positive electrode active material dry doped with Al, B, Nb, and Zr (composition: LiNi_{0.849}Co_{0.048}Mn_{0.068}Al_{0.019}B_{0.01}Nb_{0.005}Zr_{0.001}O₂).

### Comparative Example 2

NiSO₄, CoSO₄, and MnSO₄ were dissolved in deionized water in amounts such that a molar ratio of Ni:Co:Mn was 88:5:7 to prepare a transition metal-containing solution with a concentration of 2.4 M. 1,500 ppm of Zr(SO₄)₂ and 1,120 ppm of H₃BO₃ (boric acid) were further dissolved in the solution.

Ammonium niobate oxalate was dissolved in deionized water to prepare a second doping solution with a concentration of 1.2 M.

Al(NO₃)₃ was dissolved in deionized water to prepare a third doping solution with a concentration of 1.2 M.

After deionized water was put into a batch reactor (4.5 L), dissolved oxygen in the water was removed by purging the reactor with nitrogen gas to create a non-oxidizing atmosphere in the reactor. Thereafter, 15 wt% NaOH was added so that a pH in the reactor was maintained at 12.1. Thereafter, 450 g of 9 wt% NH₄OH was added.

While the transition metal-containing solution, in which 1,500 ppm of Zr(SO₄)₂ was further dissolved, the second doping solution, the third doping solution, and 9 wt% NH₄OH were added to the reactor at rates of 500 mL/h, 5 mL/h, 40 mL/h, and 150 mL/h, respectively, a reaction was performed for 4 hours at a pH of 11.7 (adjusted by adding 15 wt% NaOH), a reaction temperature of 55°C, and a stirring speed of 650 rpm in a non-oxidizing atmosphere to form a core portion represented by Ni_{0.854}Co_{0.05}Mn_{0.07}Al_{0.02}Nb_{0.005}B_{0.01}Zr_{0.002}(OH)₂.

After adjusting the pH to 11.4 by adding 15 wt% NaOH, while the transition metal-containing solution, in which 1,500 ppm of Zr(SO₄)₂ was further dissolved, the second doping solution, the third doping solution, and 9 wt% NH₄OH were added to the reactor at rates of 500 mL/h, 5 mL/h, 40 mL/h, and 150 mL/h, respectively, a reaction was performed for 16 hours at a pH of 11.4, a reaction temperature of 55°C, and a stirring speed of 450 rpm in a non-oxidizing atmosphere to form a first shell portion represented by Ni_{0.854}Co_{0.05}Mn_{0.07}Al_{0.02}Nb_{0.005}B_{0.01}Zr_{0.002}(OH)₂ on the core portion so that a positive electrode active material precursor was prepared.

The positive electrode active material precursor and LiOH were mixed so that a molar ratio of Li:transition metal was 1.07:1, and heat-treated at 805°C for 20 hours to prepare a positive electrode active material having a composition of LiNi_{0.849}Co_{0.048}Mn_{0.068}Al_{0.019}B_{0.01}Nb_{0.005}Zr_{0.001}O₂.

### Experimental Examples

### Experimental Example 1: Analysis of Positive Electrode Active Material Precursor and Positive Electrode Active Material

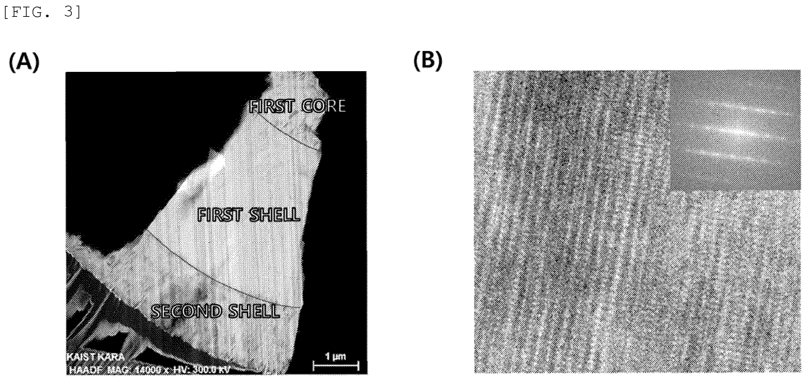

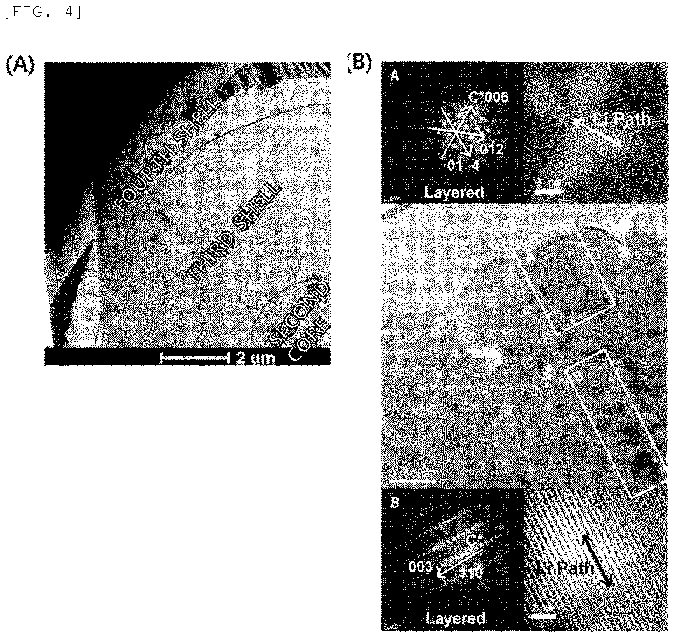

A scanning electron microscope (SEM) image of a cross section of the positive electrode active material precursor of Example 1 and a transmission electron microscope (TEM) image of the first shell portion were measured and illustrated in FIG. 3, and an SEM image of a cross section of the positive electrode active material of Example 1 and TEM images of the third shell portion and the fourth shell portion were measured and illustrated in FIG. 4.

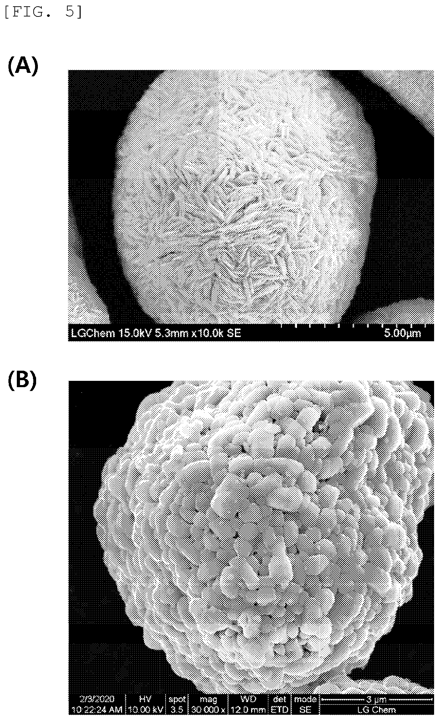

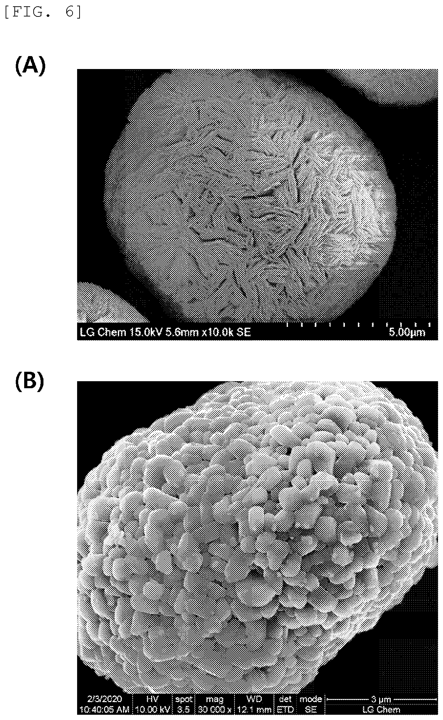

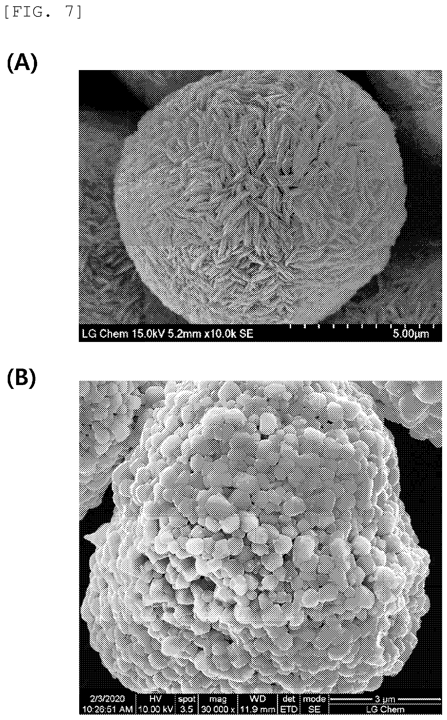

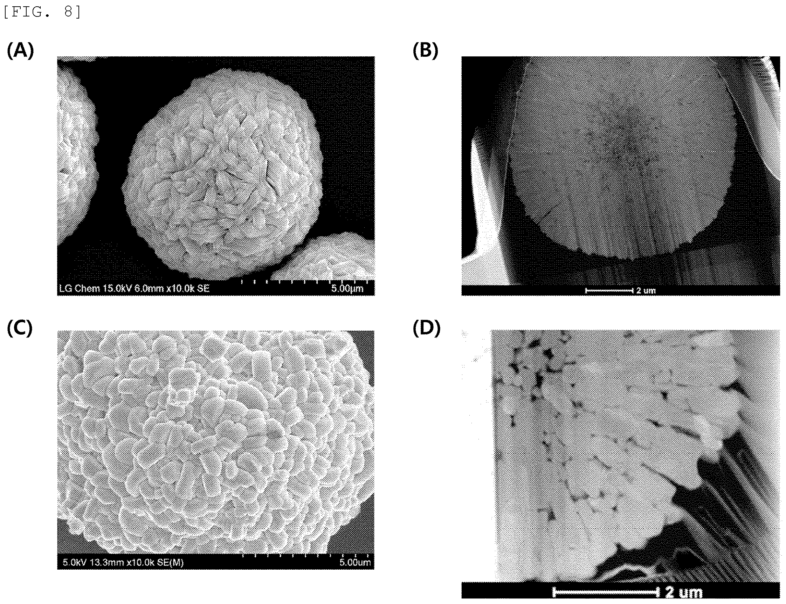

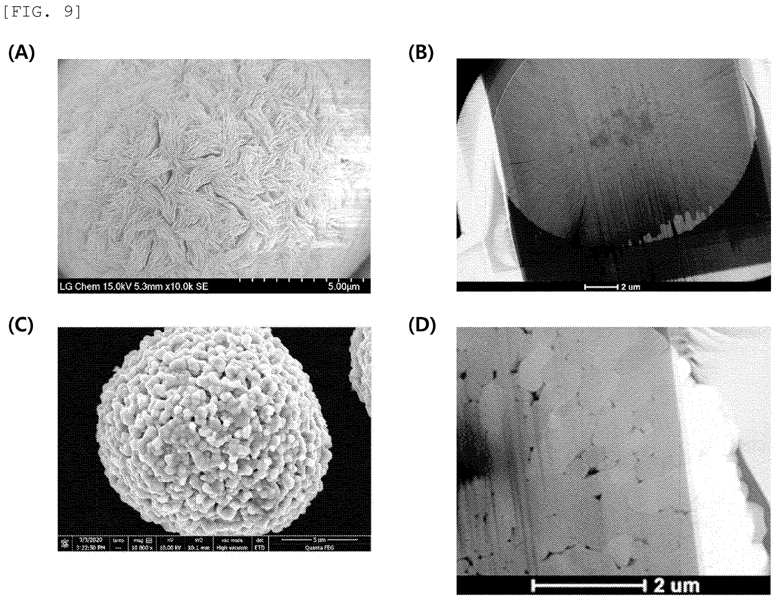

Also, SEM images of the positive electrode active material precursor and the positive electrode active material of each of Examples 1 to 3 and Comparative Examples 1 and 2 were measured and illustrated in FIGS. 5 through 9. In FIGS. 5 through 7, (A) is the SEM image of the positive electrode active material precursor, and (B) is the SEM image of the positive electrode active material. In addition, in FIGS. 8 and 9, (A) is the SEM image of the positive electrode active material precursor, (B) is the SEM image of a cross section of the positive electrode active material precursor, (C) is the SEM image of the positive electrode active material, (D) is the SEM image of a cross section of the positive electrode active material.

Referring to FIGS. 3, 5(A), 6(A), and 7(A), it may be confirmed that the precursors of Examples 1 to 3 were spherical secondary particles each formed by aggregation of primary particles, and each included a first core portion composed of the randomly oriented primary particles; a first shell portion which was formed on the first core portion and composed of the primary particles having a (001) plane oriented in a direction from the center of the secondary particle to the surface thereof; and a second shell portion which was formed on the first shell portion and composed of the randomly oriented primary particles. In addition, referring to FIGS. 4, 5(B), 6(B), and 7(B), it may be confirmed that the positive electrode active materials of Examples 1 to 3 were spherical secondary particles each formed by aggregation of primary particles, and each included a second core portion composed of the randomly oriented primary particles; a third shell portion which was formed on the second core portion and composed of the rod-shaped primary particles having a (003) plane oriented in a direction from the center of the secondary particle to the surface thereof; and a fourth shell portion which was formed on the third shell portion and composed of the randomly oriented primary particles.

### Experimental Example 2: Capacity and Resistance Characteristics Evaluation

The positive electrode active materials prepared in Examples 1 to 3 and Comparative Examples 1 and 2 were used to prepare lithium secondary batteries, and initial charge capacity, initial discharge capacity, capacity retention, and resistance increase rate were evaluated for each of the lithium secondary batteries.

Each of the positive electrode active materials prepared in Examples 1 to 3 and Comparative Examples 1 and 2, a conductive agent (FX35), and a binder (PVdF) were mixed in an N-methyl-2-pyrrolidone (NMP) solvent at a weight ratio of 97.5:1:1.5 to prepare a positive electrode slurry. One surface of an aluminum current collector was coated with the positive electrode slurry, dried, and then rolled to prepare a positive electrode. Then, a negative electrode active material (artificial graphite), a conductive agent (Super C-65), and a binder (BM-L302) were mixed in water (H₂O) at a ratio of 95.6:2.1:2.3 to prepare a negative electrode slurry. One surface of a copper current collector was coated with the negative electrode slurry, dried, and then rolled to prepare a negative electrode. Each lithium secondary battery was prepared by preparing an electrode assembly by disposing a separator between the positive electrode and the negative electrode, disposing the electrode assembly in a battery case, and then injecting an electrolyte solution. In this case, as the electrolyte solution, an electrolyte solution was used in which 1 M LiPF₆ was dissolved in an organic solvent in which ethylene carbonate and ethylmethyl carbonate were mixed in a volume ratio of 3:7.

Then, each of the secondary batteries was charged at a constant current of 0.1 C to 4.25 V at 25°C. Thereafter, each secondary battery was discharged at a constant current of 0.1 C to 3 V to measure initial charge capacity and initial discharge capacity. The results thereof are presented in Table 1 below.

In addition, capacity of the lithium secondary battery was measured by repeating a charge and discharge cycle 30 times at a constant current of 0.33 C in a voltage range of 3.0 V to 4.25 V at 45°C, and particularly, a ratio of 30^{th} cycle discharge capacity to 1^{st} cycle discharge capacity was defined as a capacity retention and the capacity retentions are presented in Table 1 below. Also, a ratio of DCIR, which was obtained by dividing a voltage drop (ΔV) for 60 seconds in a 30^{th} discharge cycle by the current, to DCIR, which was obtained by dividing a voltage drop (ΔV) for 60 seconds in a 1^{st} discharge cycle by the current, was defined as a resistance increase rate and the resistance increase rates are presented in Table 1 below.

**[Table 1]**

| | Initial charge capacity (mAh/g) at 25°C | Initial discharge capacity (mAh/g) at 25°C | Capacity retention (%) at 45°C | Initial resistance (Ω) | Resistance increase rate (%) |
|---|---|---|---|---|---|
| Example 1 | 229.1 | 208.6 | 96.97 | 16.29 | 119 |
| Example 2 | 227.3 | 209.6 | 96.76 | 15.58 | 126 |
| Example 3 | 226.9 | 210.7 | 96.38 | 16.37 | 132 |
| Comparative Example 1 | 227.3 | 206.5 | 94.49 | 17.24 | 164 |
| Comparative Example 2 | 224.4 | 207.1 | 91.24 | 16.89 | 171 |

Referring to Table 1, it may be confirmed that the positive electrode active materials of Examples 1 to 3 had better initial discharge capacity and capacity retention and lower resistance increase rate as well as lower initial resistance than the positive electrode active materials of Comparative Examples 1 and 2.

As a result, since the positive electrode active material according to the present invention was prepared from the positive electrode active material precursor including the first core portion composed of the randomly oriented primary particles; the first shell portion which was formed on the first core portion and composed of the primary particles having a (001) plane oriented in the direction from the center of the secondary particle to the surface thereof; and the second shell portion which was formed on the first shell portion and composed of the randomly oriented primary particles, the orientation of the first shell portion of the positive electrode active material precursor remained even in the positive electrode active material, and thus, it may be understood that capacity characteristics, life characteristics, and resistance characteristics were excellent. Particularly, since the positive electrode active material precursor was formed in the form of the first core portion-the first shell portion-the second shell portion and the first core portion, the first shell portion, and the second shell portion have specific compositions, respectively, the side reaction between the dopants was suppressed and the doping efficiency was increased, and thus, it may be understood that the characteristics suitable for the purpose of dopant selection, for example, the increase in lifetime or the improvement in output, may be achieved without the degradation of the existing performance.

In contrast, since the positive electrode active material precursor and the positive electrode active material of Comparative Example 1 not only had different shapes from the positive electrode active material precursor and the positive electrode active material according to the present invention in terms of the fact that they did not include two layers of the shell portions having different orientations of the primary particles, but also used several types of doping elements at once during dry doping to form an unwanted material on the surface of the positive electrode active material due to the side reaction between the doping elements, it may be confirmed that there were problems in capacity, life, and resistance characteristics. In addition, since the positive electrode active material precursor and the positive electrode active material of Comparative Example 2 not only had different shapes from the positive electrode active material precursor and the positive electrode active material according to the present invention in terms of the fact that they did not include two layers of the shell portions having different orientations of the primary particles, but also used several types of doping elements at once during wet doping to modify the surface energy by the doping elements, a shape, size, or orientation direction of the primary particles was modified, and thus, it may be confirmed that there were problems in capacity, life, and resistance characteristics.

### [Description of the Symbols]

100: Positive Electrode Active Material Precursor
110: First Core Portion
120: First Shell Portion
130: Second Shell Portion
200: Positive Electrode Active Material
210: Second Core Portion
220: Third Shell Portion
230: Fourth Shell Portion

## Claims

1. A positive electrode active material precursor, which is a spherical secondary particle formed by aggregation of primary particles, comprising:
a first core portion composed of the randomly oriented primary particles; a first shell portion which is formed on the first core portion and composed of the primary particles having a (001) plane oriented in a direction from a center of the secondary particle toward a surface thereof; and a second shell portion which is formed on the first shell portion and composed of the randomly oriented primary particles.

2. The positive electrode active material precursor of claim 1, wherein the first core portion has a composition represented by Formula 1:
[Formula 1] [Niₐ₁Co_{b1}Mn_{c1}M1_{d1}M2ₑ₁] (OH)₂
wherein, in Formula 1,
M1 is at least one element selected from zirconium (Zr), boron (B), and magnesium (Mg),
M2 is at least one element selected from niobium (Nb), titanium (Ti), aluminum (Al), molybdenum (Mo), tungsten (W), tantalum (Ta), vanadium (V), and lanthanum (La), and
0.6≤a1<1, 0<b1≤0.4, 0<c1≤0.4, 0≤d1≤0.1, 0≤e1≤0.1, and a1+b1+c1+d1+e1=1.

3. The positive electrode active material precursor of claim 1, wherein the first shell portion has a composition represented by Formula 2:
[Formula 2] [Niₐ₂Co_{b2}Mn_{c2}M1_{d2}] (OH)₂
wherein, in Formula 2,
M1 is at least one element selected from Zr, B, and Mg, and
0.6≤a2<1, 0<b2≤0.4, 0<c2≤0.4, 0≤d2≤0.1, and a2+b2+c2+d2=1.

4. The positive electrode active material precursor of claim 1, wherein the second shell portion has a composition represented by Formula 3:
[Formula 3] [Niₐ₃Co_{b3}Mn_{c3}M1_{d3}M3_{f3}](OH)₂
wherein, in Formula 3,
M1 is at least one element selected from Zr, B, and Mg,
M3 is at least one element selected from Nb, Ti, Al, Mo, W, Ta, V, and La, and
0.6≤a3<1, 0<b3≤0.4, 0<c3≤0.4, 0≤d3≤0.1, 0<f3≤0.1, and a3+b3+c3+d3+f3=1.

5. The positive electrode active material precursor of claim 1, wherein the first shell portion has a thickness of 1 um or more to 9 µm or less.

6. The positive electrode active material precursor of claim 1, wherein the second shell portion has a thickness of 0.5 um or more to 2 µm or less.

7. A method of preparing the positive electrode active material precursor of claim 1, the method comprising steps of:
(A) forming a first core portion by a co-precipitation reaction while continuously adding a transition metal-containing solution containing nickel (Ni), cobalt (Co), and manganese (Mn) ions, an ammonium cationic complexing agent, and a basic solution to a reactor;
(B) forming a first shell portion on the first core portion by a co-precipitation reaction while continuously adding the transition metal-containing solution, an ammonium cationic complexing agent, and a basic solution to the reactor including the first core portion; and
(C) forming a second shell portion on the first shell portion by a co-precipitation reaction while continuously adding the transition metal-containing solution, an ammonium cationic complexing agent, a basic solution, and a third doping solution containing M3 (at least one element selected from niobium (Nb), titanium (Ti), aluminum (Al), molybdenum (Mo), tungsten (W), tantalum (Ta), vanadium (V), and lanthanum (La)) ions to the reactor including the first shell portion formed on the first core portion,
wherein the co-precipitation reaction of step (B) is performed at a lower pH than the co-precipitation reaction of step (A).

8. The method of claim 7, wherein, in step (A), the first core portion is formed by a co-precipitation reaction while further adding a first doping solution containing M1 (at least one element selected from Zr, B, and Mg) ions, a second doping solution containing M2 (at least one element selected from Nb, Ti, Al, Mo, W, Ta, V, and La) ions, or a combination thereof.

9. The method of claim 7, wherein, in step (B), the first shell portion is formed on the first core portion by a co-precipitation reaction while further adding a first doping solution containing M1 (at least one element selected from Zr, B, and Mg) ions.

10. The method of claim 7, wherein, in step (C), the second shell portion is formed on the first shell portion by a co-precipitation reaction while further adding a first doping solution containing M1 (at least one element selected from Zr, B, and Mg) ions.

11. A positive electrode active material, which is a spherical secondary particle formed by aggregation of primary particles, comprising:
a second core portion composed of the randomly oriented primary particles; a third shell portion which is formed on the second core portion and composed of the rod-shaped primary particles having a (003) plane oriented in a direction from a center of the secondary particle toward a surface thereof; and a fourth shell portion which is formed on the third shell portion and composed of the randomly oriented primary particles.

12. The positive electrode active material of claim 11, wherein the positive electrode active material has a composition represented by Formula 4:
[Formula 4] Liₓ[Niₐ₄Co_{b4}Mn_{c4}M1_{d4}M2ₑ₄M3_{f4}]O₂
wherein, in Formula 4,
M1 is at least one element selected from zirconium (Zr), boron (B), and magnesium (Mg),
M2 and M3 are each independently at least one element selected from niobium (Nb), titanium (Ti), aluminum (Al), molybdenum (Mo), tungsten (W), tantalum (Ta), vanadium (V), and lanthanum (La), and
0.9≤x≤1.2, 0.6≤a4<1, 0<b4≤0.4, 0<c4≤0.4, 0≤d4≤0.1, 0≤e4≤0.1, 0<f4≤0.1, and a4+b4+c4+d4+e4+f4=1.

13. The positive electrode active material of claim 11, wherein the primary particles constituting the second core portion are spherical primary particles.

14. The positive electrode active material of claim 11, wherein the primary particles constituting the fourth shell portion are spherical primary particles.

15. The positive electrode active material of claim 11, wherein the third shell portion has a thickness of 1 um or more to 9 µm or less.

16. The positive electrode active material of claim 11, wherein the fourth shell portion has a thickness of 0.5 um or more to 2 µm or less.
